# EUROPÄISCHE PATENTSCHRIFT

(11) **EP 4 485 348 B1**
(45) Veröffentlichungstag und Bekanntmachung des Hinweises auf die Patenterteilung: **18.03.2026**
(21) Anmeldenummer: 23181781.8
(22) Anmeldetag: 27.06.2023
(51) Int. Cl.: G06T 7/00

(54) **COMPUTER-IMPLEMENTIERTES VERFAHREN UND WERKZEUG ZUR OPTISCHEN QUALITÄTSKONTROLLE VON ZWISCHEN- ODER ENDPRODUKTEN VON PRODUKTIONSANLAGEN SOWIE PRODUKTIONSANLAGENSTEUERUNG**
COMPUTER-IMPLEMENTED METHOD AND TOOL FOR OPTICALLY CHECKING THE QUALITY OF INTERMEDIATE OR END PRODUCTS OF PRODUCTION FACILITIES, AND PRODUCTION FACILITY CONTROLLER
PROCÉDÉ MIS EN OEUVRE PAR ORDINATEUR ET OUTIL DE CONTRÔLE DE QUALITÉ OPTIQUE DE PRODUITS INTERMÉDIAIRES OU FINAUX D'INSTALLATIONS DE PRODUCTION AINSI QUE COMMANDE D'INSTALLATIONS DE PRODUCTION

(43) Veröffentlichungstag der Anmeldung: 01.01.2025
(73) Patentinhaber: Siemens Aktiengesellschaft, 80333 München (DE)
(72) Erfinder: Dietrich, Vincent, 80639 München (DE); Schmitt, Philipp Sebastian, 80797 München (DE); Wirnshofer, Florian, 80939 München (DE); Wurm, Kai, 81739 München (DE)
(74) Vertreter: Siemens Patent Attorneys

(56) Entgegenhaltungen:
- WO-A1-2022/269470
- CN-A- 115 239 621
- US-A1- 2021 311 455

## Beschreibung

Die Erfindung bezieht sich auf ein computer-implementiertes Verfahren zur optischen Qualitätskontrolle von Zwischen- oder Endprodukten von Produktionsanlagen gemäß dem Oberbegriff des Patentanspruches 1, ein computer-implementiertes Werkzeug zur optischen Qualitätskontrolle von Zwischen- oder Endprodukten von Produktionsanlagen gemäß dem Oberbegriff des Patentanspruches 6 und eine Produktionsanlagensteuerung gemäß dem Oberbegriff des Patentanspruches 11.

Produktionsprozesse von Produktionsanlagen, egal auf welchem Gebiet oder in welcher Domäne sie auf einer entsprechenden Produktionsanlage ablaufen, sind nie fehlerfrei und müssen durch oft optische Qualitätskontrolle abgesichert werden. Dies gilt insbesondere für automatisierte Produktionsprozesse. Bei der optischen Qualitätskontrolle wird dabei ein Bild vom Produkt oder eines Teiles des Produktes aufgenommen und auf Basis des Bildes berechnet, ob alle Merkmale den Anforderungen entsprechen. Das Einrichten der Qualitätskontrolle ist dabei mit Engineering Aufwand verbunden, der insbesondere bei autonomen automatisierten Produktionsanlagen im industriellen Umfeld hinderlich ist, die sich mit minimalem Aufwand an neue Produkte anpassen sollen.

Ein typisches Beispiel für einen solchen Produktionsprozess ist Montage eines Produktes im industriellen Umfeld (industrielle Domäne) mittels eines Robotersystems oder Automatisierungssystems, bei dem ein universell einsetzbarer Bewegungsautomat zum Ausführen von Handhabungs-, Service- und/oder Fertigungsaufgaben für die Montage verwendet wird und wo, z.B. nach einem Fügevorgang, überprüft werden muss, ob ein zu montierendes Bauteil an der richtigen Stelle eingesetzt wurde und vollständig eingerastet ist.

Für diesen Zweck ist es bekannt dem Inbetriebnehmer der Produktionsanlage, insbesondere des Robotersystems, Werkzeuge an die Hand zu geben, um möglichst einfach die Qualitätsregeln zu definieren. Beispielsweise, dass bestimmte optische Merkmale, wie z.B. Kreise, Linien, Muster, im optisch erfassten Bild an bestimmten Positionen sein oder bestimmte Maße haben müssen. Diese Regeln überprüft der Inbetriebnehmer dann mit ein paar Beispielbilder und passt Parameter an, bis die gewünschte Zuverlässigkeit erzielt wird.

Ein Dokument CN 15239621 A offenbart ein visuelles intelligentes Inspektionsverfahren für Umspannwerke, das auf der Übereinstimmung zwischen virtuellen und realen Szenen basiert und zum Bereich der Umspannwerksinspektion gehört.

Ein Dokument WO 2022269470 A1 betrifft eine modulare Vorrichtung und ein Verfahren zur Inspektion von Industrieprodukten.

Gemäß einem Dokument US 2021311455 A1 wird ein Computersystem sowie ein Verfahren und ein Programm zur Betriebsüberprüfung bereitgestellt, mit denen der Betrieb einer Werkzeugmaschine einfacher und genauer überprüft werden kann.

Die der Erfindung zugrundeliegende Aufgabe besteht darin, ein computer-implementiertes Verfahren und Werkzeug zur optischen Qualitätskontrolle von Zwischen- oder Endprodukten von Produktionsanlagen sowie eine Produktionsanlagensteuerung anzugeben, mit dem bzw. der der Aufwand für das Einrichten der Qualitätskontrolle bei sich ständig ändernden Bedingungen und Verhältnissen an den Produktionsanlagen für die Qualitätskontrolle an einen entsprechend adaptiv angepassten Einsatz der Produktionsanlagen reduziert werden kann.

Diese Aufgabe wird ausgehend von dem im Oberbegriff des Patentanspruchs 1 definierten computer-implementierten Verfahren durch die im Kennzeichen des Patentanspruches 1 angegebenen Merkmale gelöst.

Darüber hinaus wird diese Aufgabe ausgehend von dem im Oberbegriff des Patentanspruchs 6 definierten computer-implementierten Werkzeug durch die im Kennzeichen des Patentanspruches 6 angegebenen Merkmale gelöst.

Außerdem wird diese Aufgabe ausgehend von der im Oberbegriff des Patentanspruchs 11 definierten Produktionsanlagensteuerung durch die im Kennzeichen des Patentanspruches 11 angegebenen Merkmale gelöst.

Die der Erfindung gemäß den unabhängigen Patentansprüchen 1, 6 und 11 zugrundeliegende Idee besteht darin, dass für eine optische Qualitätskontrolle von Zwischen- oder Endprodukten einer Produktionsanlage, bei der ein von einer Bilderfassungseinrichtung für gegebene intrinsische und extrinsische Parameter erfasstes Produktbild der Produktionsanlage verwendet wird und Digitale Zwillingsdaten von einem Digitalen Zwilling der Produktionsanlage (PA) verwendet werden, wobei der Digitale Zwilling zur Laufzeit der Produktionsanlage mit dieser synchronisiert ist, (i) ein auf den Digitale Zwillingsdaten (basierenden, synthetischen Simulationsbilds gerendert wird, wobei dem gerenderten synthetischen Simulationsbild die gleichen intrinsischen und extrinsischen Parameter zugrunde liegen wie bei der Produktbilderfassung, (ii) das Produktbild aus einer realen Domäne in eine artifizielle Domäne mittels einer trainierten Domänenadaption transferiert wird und dabei mit durch das Training gewonnene Domänentransferparameter aus dem Produktbild ein synthetisches Produktbild erzeugt wird, (iii) das synthetische Produktbilds mit dem synthetischen Simulationsbild mittels eines Vergleichsoperators verglichen wird und (iv) ein das Produkt qualitativ bewertenden Vergleichsergebnisses ausgegeben wird.

Im Vergleich zu klassischen regelbasierten Methoden wird mit der Erfindung ein fundamental anderer Ansatz verfolgt, der bessere Skalierungsmöglichkeiten bietet.

Ein wesentlicher Erfindungsaspekt ist dabei für die Qualitätskontrolle die Verwendung einer Domänentransformation von einer realen Bilddomäne in eine artifizielle Bilddomäne. Dadurch ergibt sich ein einfacherer Bildvergleich zur Erkennung von Bildunterschieden.

Eine vorteilhafte Weiterbildung der Erfindung gemäß den Ansprüchen 2 und 7 besteht darin, dass die Domänenadaption als ein "Machine Learning"-Modell nach dem Prinzip eines "Generative Adversarial Network <GAN>" durchgeführt wird, bei dem zur Datengenerierung zwei konkurrierende, als Generator und Diskriminator bezeichnete Künstliche Neuronale Netzwerke verwendet werden, von den der Generator artifizielle Daten erzeugt, die der Diskriminator auf Basis authentischer, z.B. anhand von Bildern erfasster, Daten prüft und wobei die beiden Netzwerke logisch und mathematisch so miteinander verknüpft sind, dass die vom Generator erzeugten artifiziellen Daten immer echter wirken und am Ende der Diskriminator nicht mehr in der Lage ist, die echten Daten von den authentischen Daten zu unterscheiden.

Weiterhin ist von Vorteil, wenn gemäß den Ansprüchen 3 und 8 die trainierte Domänenadaption mit den Domänentransferparameter in einem zweistufigen Training mit folgenden Schritten "S1" und "S2" durchgeführt wird
"S1": Erzeugen eines Datensatzes auf der Basis von einer Vielzahl "n" von Bildpaaren, die jeweils für einheitlich gegebene intrinsische und extrinsische Parameter aus einem erfassten Produktbild und einem dazugehörigen synthetischen Simulationsbild gebildet werden;
"S2": Trainieren des Transfers von produktbildbezogenen Daten zu simulationsbildbezogenen Daten anhand des erzeugten Datensatzes durch lernende Methoden wie z.B. "Generative Adversarial Network <GAN>".

Darüber hinaus zeichnet sich die Erfindung in vorteilhafter Weise dadurch aus, das
- gemäß den Ansprüchen 4 und 9 der Vergleichsoperator derart ausgebildet ist, dass der Vergleich pixelweise durchgeführt wird.
- gemäß den Ansprüchen 5 und 10 die Produktionsanlage ein Robotersystem oder Automatisierungssystem mit einem universell einsetzbaren Bewegungsautomat zum Ausführen von Handhabungs-, Service- und/oder Fertigungsaufgaben ist.

Das der Erfindung zugrundeliegende, prinzipielle Szenario soll nachfolgend skizziert werden.

Ausgangspunkt für das zu skizzierende Szenario ist dabei die Voraussetzung, dass ein detaillierter Digitale Zwilling der Produktionsanlage zur Laufzeit vorhanden ist. Dieser Digitale Zwilling beinhaltet:
- Geometrien und/oder Texturen der verwendeten Objekte, Roboter und Komponenten der Produktionsanlage
- Erwartete Positionen und Orientierungen der Objekte, Roboter und Komponenten der Produktionsanlage zur Laufzeit, also zum gegebenen Zeitpunkt

Diese Vorausbedingung ist im Regelfall erfüllt für autonom handelnde Produktionsanlagen oder -systeme, sie kann aber auch für klassische Produktionsanlagen oder -systeme erfüllt oder nachgerüstet werden.

Ausgehend hiervon oder auf dieser Basis wird gemäß dem Erfindungsansatz ein echtes Bild von einem zu prüfenden Teil oder Produkt, z.B. Zwischen- oder Endprodukt, der Produktionsanlage aufgenommen und dieses Bild mithilfe eines Domänenanpassung in einen Bildraum einer Simulation transferiert. Weiterhin wird das transferierte Bild mit einem synthetisch gerenderten Bild verglichen, das mithilfe des Digitalen Zwillings erzeugt worden ist. Die nun im gleichen Bildraum vorhandenen und "synthetisch aussehenden" Bilder können nun mithilfe eines Vergleichsoperators auf Unterschiede untersucht werden. Die Ausgabe eines Vergleichsergebnisses kann dabei z.B. ein Qualitätsergebnis "OK" oder nicht "OK" sein.

Das Qualitätsergebnis kann dann im weiteren Prozess automatisch berücksichtigt werden, beispielsweise können fehlerhaft produzierte Produkte (z.B. Zwischen- oder Endprodukte) automatisch aussortiert werden oder aber ein Nutzer der Produktionsanlage kann zu Unterstützung gerufen werden.

Das Erfindungsansatz hat zwei Hauptstufen:
**1.** Training für Domänenadaption: In diesem Schritt wird die Grundlage dafür geschaffen, Bilder aus einer realen Domäne in eine artifizielle Domäne zu transferieren. Dies ist Bestandteil der Domänenadaption. Ein mögliche, beispielhafte Methode des Trainings für die Domänenadaption ist dabei die bereits erwähnte "Generative Adversarial Network <GAN>"-Technologie.
   Das Training lässt sich wie folgt charakterisieren:
   **a.** In einem ersten Schritt ein Datensatz aufgenommen werden aus echten Bildern und dazugehörigen synthetischen Bildern, die für die optische Erfassung jeweils aus der gleichen Perspektive und den gleichen Parametern (extrinsisch und intrinsisch) einer Bilderfassungseinrichtung, z.B. einer Kamera, besteht.
      - Die Datenaufnahme und das Training kann dabei in der Anfangsphase der Inbetriebnahme der Produktionsanlage erfolgen und muss je nach Variabilität der zu produzierenden Produkte (Zwischen- oder Endprodukte) nur einmalig für die Produktionsanlage durchgeführt werden. D.h. beim Produktwechsel ist wäre kein erneutes Training notwendig.
      - Die Datenaufnahme läuft dabei während einer Test- oder Hochlaufphase mit. Dabei werden an Stellen mit Bedarf für Qualitätskontrolle echte Bilder aufgenommen und gespeichert und die Kameraparameter (intrinsische und extrinsische Parameter der Bilderfassungseinrichtung) ebenso gespeichert. Als Teil der Datenaufnahme für das Training wird zudem mithilfe des digitalen Zwillings das dazugehörige synthetische Bild aus der gleichen Perspektive und mit den gleichen Parametern gerendert und im Datensatz gespeichert.
   **b.** Final folgt der Trainingsschritt, in dem der Transfer von realen Daten zu synthetischen gelernt wird. Hierfür kommt beispielsweise wieder die bereits erwähnte "Generative Adversarial Network <GAN>"-Technologie in Frage.
**2.** Produktionsanlagenbetrieb:
   **a.** Die Bilderfassungseinrichtung in eine geeignete Position bringen, damit das Produkt oder Bauteil, das Zwischen- oder Endprodukt, sichtbar ist. Geeignete Positionen können zur Laufzeit Produktionsanlage über Heuristiken berechnet werden. Dies gilt insbesondere für eine autonome Produktionsanlage.
   **b.** Aufnahme eines Produktbildes
   **c.** Transformation des echten Produktbildes in die Bilddomäne eines synthetischen (simulierten) Bildes mithilfe von Domänenadaption, z.B. der "Generative Adversarial Network <GAN>"-Technologie
   **d.** Rendern einem synthetischen Bild, das im Digitalen Zwilling aus der gleichen Position mit identischen Parametern (intrinsische und extrinsische Parameter der Bilderfassungseinrichtung) aufgenommen wird.
   **e.** Vergleich der Bilder mithilfe eines Vergleichsoperators. In einer vorteilhaften Ausgestaltung der Erfindung kann hier ein neuronales Netz verwendet werden, aber auch klassische pixel-basierte Methoden sind geeignet.

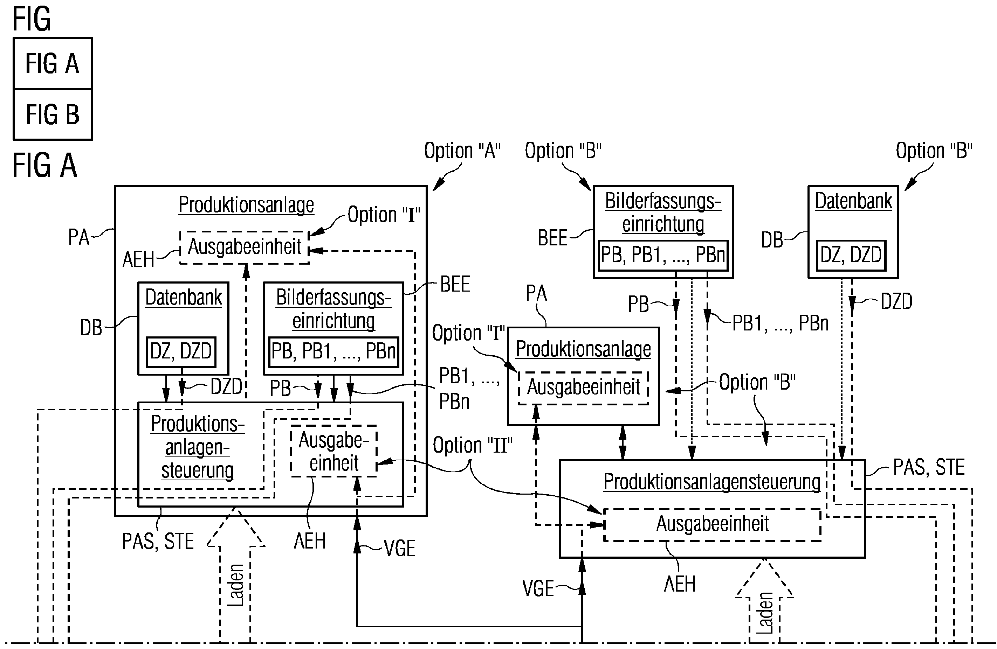

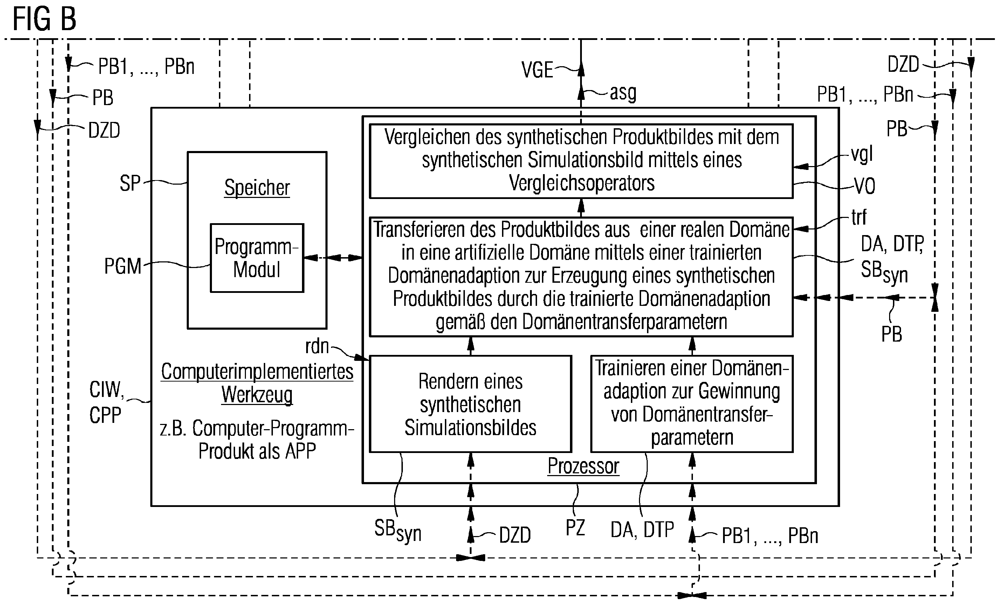

Weitere Vorteile der Erfindung ergeben sich aus der nachfolgenden Beschreibung eines Ausführungsbeispiels der Erfindung anhand einer einzigen FIGUR.

Die FIGUR zeigt eine Produktionsanlage PA mit optischer Qualitätskontrolle für Zwischen- oder Endprodukte der Produktionsanlage, die auf verschiedenen technischen Gebieten (in technischen Domänen) für die Produktherstellung mittels adäquater Verfahren und Techniken, z.B. in Fabriken, Fertigungsstraßen und Großgeräten, einsetzbar ist.

In einer ersten Ausführungsvariante der Erfindung zur optischen Qualitätskontrolle von Zwischen- oder Endprodukten gemäß einer Option **"A"** enthält die Produktionsanlage PA eine Produktionsanlagensteuerung PAS, eine Datenbank DB, eine Bilderfassungseinrichtung BEE, die z.B. in Form und Gestalt einer Kamera ausgebildet ist, und eine Ausgabeeinheit AEH. Während die Datenbank DB und die Bilderfassungseinrichtung BEE für Zugriffe der Produktionsanlagensteuerung PAS mit dieser verbunden sind, ist die Ausgabeeinheit AEH entweder in einer ersten Ausführungsform gemäß Option **"I",** wie die Datenbank DB und die Bilderfassungseinrichtung BEE, für Zugriffe der Produktionsanlagensteuerung PAS mit dieser verbunden oder in einer zweiten Ausführungsform gemäß Option **"II"** in der der Produktionsanlagensteuerung PAS enthalten.

Alternativ zu der ersten Ausführungsvariante der Erfindung gemäß der Option **"A"** sind in einer zweiten Ausführungsvariante der Erfindung zur optischen Qualitätskontrolle von Zwischen- oder Endprodukten gemäß einer Option **"B"** die Produktionsanlage PA, die Produktionsanlagensteuerung PAS, die Datenbank DB und die Bilderfassungseinrichtung BEE nicht "unter einem Dach" dem Dach der Produktionsanlage PA vereint, sondern sie fungieren allesamt als separate Einheiten, bei der die Produktionsanlagensteuerung PAS mit der Produktionsanlage PA, der Datenbank DB und der Bilderfassungseinrichtung BEE für Zugriffe verbunden ist, während die Ausgabeeinheit AEH entweder in der ersten Ausführungsform gemäß der Option **"I"** in der Produktionsanlage PA für Zugriffe der Produktionsanlagensteuerung PAS enthalten ist oder in der zweiten Ausführungsform gemäß der Option **"II"** in der der Produktionsanlagensteuerung PAS enthalten ist.

Zwischen diesen beiden "extremen" Ausführungsvarianten der Erfindung sind auch andere Varianten vorstellbar (in der FIGUR nicht explizit dargestellt), wo entweder nur die Datenbank DB, die Bilderfassungseinrichtung BEE oder die Produktionsanlagensteuerung PAS in der Produktionsanlage PA enthalten ist oder die Produktionsanlage PA jeweils zwei der genannten Einheiten enthält.

In beiden dargestellten Ausführungsvarianten gemäß den Optionen **"A"** und **"B"** ist die Produktionsanlagensteuerung PAS vorzugsweise eine Steuerungseinheit STE für ein Robotersystem oder Automatisierungssystem mit einem universell einsetzbaren Bewegungsautomat zum Ausführen von Handhabungs-, Service- und/oder Fertigungsaufgaben.

Bezüglich der dargestellten Ausführungsvariante gemäß der Option **"B"** ist es alternative auch möglich, dass die Produktionsanlagensteuerung PAS ein gewöhnlicher Personal Computer oder Controller ist.

Die nachfolgenden Ausführungen zur Beschreibung der FIGUR gelten für beide dargestellten Ausführungsvarianten der Erfindung zur optischen Qualitätskontrolle von Zwischen- oder Endprodukten gemäß den Optionen **"A"** und **"B".**

Zu diesem Zweck
- erfasst die Bilderfassungseinrichtung BEE für gegebene intrinsische und extrinsische Parameter der Bilderfassungseinrichtung BEE sowohl ein Produktbild PB der Produktionsanlage PA, das eine Zwischen- oder Endprodukt betreffen kann, als auch für einheitlich gegebene intrinsische und extrinsische Parameter der Bilderfassungseinrichtung BEE zur Erzeugung eines Datensatzes auf der Basis von einer Vielzahl "n" von Bildpaaren Produktbilder PB1, ..., PBn.
- speichert die Datenbank DB Digitalen Zwillingsdaten DZD eines Digitalen Zwillings DZ der Produktionsanlage PA, wobei der Digitale Zwilling DZ zur Laufzeit der Produktionsanlage PA mit dieser synchronisiert ist.
- kommt ein computerimplementiertes Werkzeug CIW zum Einsatz, das vorzugsweise ein als APP ausgebildetes Computer-Programm-Produkt CPP ist und zur optischen Qualitätskontrolle für Zwischen- oder Endprodukten der Produktionsanlag PA in die Produktionsanlagensteuerung PAS ladbar ist.

Das computerimplementiertes Werkzeug CIW enthält einen nicht-flüchtigen, lesbaren Speicher SP, in dem prozessorlesbare Steuerprogrammbefehle eines Programm-Moduls PGM zur optischen Qualitätskontrolle gespeichert sind, und einen mit dem Speicher SP verbundenen Prozessor PZ, der die Steuerprogrammbefehle des Programm-Moduls PGM zur optischen Qualitätskontrolle für Zwischen- oder Endprodukte der Produktionsanlag PA ausführt.

Hierfür nutzt das computerimplementiertes Werkzeug CIW
- das von der Bilderfassungseinrichtung BEE für gegebene intrinsische und extrinsische Parameter erfasste Produktbild PB der Produktionsanlage PA und die von der Bilderfassungseinrichtung BEE für gegebene intrinsische und extrinsische Parameter zur Erzeugung des Datensatzes auf der Basis von der Vielzahl "n" von Bildpaaren erfassten Produktbilder PB1, ..., PBn,
- die in der Datenbank DB gespeicherten Digitale Zwillingsdaten DZD des Digitalen Zwillings DZ der Produktionsanlage PA, wobei der Digitale Zwilling DZ zur Laufzeit der Produktionsanlage PA mit dieser synchronisiert ist.

Diese Daten werden beim Laden des computerimplementiertes Werkzeugs CIW in die Produktionsanlagensteuerung PAS dem Prozessor PZ als Input-Daten durch Zugriff angefragt und dann entweder eingezogen oder zugeführt.

Das Programm-Modul PGM des computerimplementiertes Werkzeugs CIW ist derart beschaffen und der die Steuerprogrammbefehle des Programm-Moduls PGM zur optischen Qualitätskontrolle ausführende Prozessor PZ des computerimplementiertes Werkzeugs CIW ist derart ausgebildet sind, dass folgende Schritte zur optischen Qualitätskontrolle durchgeführt werden:
- Rendern rdn eines auf den Digitale Zwillingsdaten DZD basierenden, synthetischen Simulationsbilds SB_{syn}. Dem gerenderten synthetischen Simulationsbild SB_{syn} werden dabei die gleichen intrinsischen und extrinsischen Parameter zugrunde gelegt wie bei der Produktbilderfassung.
- Transferieren trf des Produktbilds PB aus einer realen Domäne in eine artifizielle Domäne mittels einer trainierten trn Domänenadaption DA.
   -- Die Domänenadaption wird z.B. vorzugsweise als ein "Machine Learning"-Modell nach dem Prinzip eines "Generative Adversarial Network <GAN>" durchgeführt, bei dem zur Datengenerierung zwei konkurrierende, als Generator und Diskriminator bezeichnete Künstliche Neuronale Netzwerke verwendet werden, von den der Generator artifizielle Daten erzeugt, die der Diskriminator auf Basis authentischer, z.B. anhand von Bildern erfasster, Daten prüft und wobei die beiden Netzwerke logisch und mathematisch so miteinander verknüpft sind, dass die vom Generator erzeugten artifiziellen Daten immer echter wirken und am Ende der Diskriminator nicht mehr in der Lage ist, die echten Daten von den authentischen Daten zu unterscheiden.
   -- Die Domänenadaption DA enthält durch das Training trn gewonnene Domänentransferparameter DTP. Die trainierte trn Domänenadaption DA mit den Domänentransferparameter DTP wird vorzugsweise in einem zweistufigen Training trn mit folgenden Schritten "S1" und "S2" durchgeführt
      "S1": Erzeugen eines Datensatzes auf der Basis von einer Vielzahl "n" von Bildpaaren, die für einheitlich gegebene intrinsische und extrinsische Parameter aus den erfassten Produktbildern PB1, ..., PBn und dazugehörigen synthetischen Simulationsbild SB1_{syn}, ..., SBn_{syn} gebildet werden;
      "S2": Trainieren des Transfers von produktbildbezogenen Daten zu simulationsbildbezogenen Daten anhand des erzeugten Datensatzes durch lernende Methoden wie z.B. "Generative Adversarial Network <GAN>".
   -- Nach dem Training wird mit der trainierten Domänenadaption DA gemäß den Domänentransferparametern DTP aus dem Produktbild PB ein synthetisches Produktbild PB_{syn} erzeugt. Dadurch entsteht zu Vergleichszwecken ein aus dem synthetischen Simulationsbild SB_{syn} und dem synthetischen Produktbild PB_{syn} gebildetes Bildpaar in einem artifiziellen Bildraum.
- Vergleichen vgl das synthetische Produktbilds PB_{syn} mit dem synthetischen Simulationsbild SB_{syn} mittels eines Vergleichsoperators VO. Der Vergleichsoperator VO ist z.B. vorzugsweise derart ausgebildet sind, dass der Vergleich pixelweise durchgeführt wird.
- Ausgegeben asg eines das Produkt qualitativ bewertenden Vergleichsergebnisses VGE. Diese Vergleichsergebnisses VGE wird z.B. vorzugsweise durch die Ausgabeeinheit AEH der Produktionsanlage PA oder der Produktionsanlagensteuerung PAS der Produktionsanlage PA ausgegeben asg.

## Patentansprüche

1. Computer-implementiertes Verfahren zur optischen Qualitätskontrolle von Zwischen- oder Endprodukten von Produktionsanlagen, bei dem für die Qualitätskontrolle
- ein von einer Bilderfassungseinrichtung (BEE) für gegebene intrinsische und extrinsische Parameter erfasstes Produktbild (PB) einer Produktionsanlage (PA) verwendet wird,
- Digitale Zwillingsdaten (DZD) von einem Digitalen Zwilling (DZ) der Produktionsanlage (PA) verwendet werden, wobei der Digitale Zwilling (DZ) zur Laufzeit der Produktionsanlage (PA) mit dieser synchronisiert ist,
**gekennzeichnet durch**
**a)** Rendern (rdn) eines auf den Digitale Zwillingsdaten (DZD) basierenden, synthetischen Simulationsbilds (SB_{syn}), wobei dem gerenderten synthetischen Simulationsbild (SB_{syn}) die gleichen intrinsischen und extrinsischen Parameter zugrunde liegen wie bei der Produktbilderfassung,
**b)** Transferieren (trf) des Produktbilds (PB) aus einer realen Domäne in eine artifizielle Domäne mittels einer trainierten (trn) Domänenadaption (DA), die **durch** das Training (trn) gewonnene Domänentransferparameter (DTP) enthält und mit der gemäß den Domänentransferparametern (DTP) aus dem Produktbild (PB) ein synthetisches Produktbild (PB_{syn}) erzeugt wird, wodurch zu Vergleichszwecken ein aus dem synthetischen Simulationsbild (SB_{syn}) und dem synthetischen Produktbild (PB_{syn}) gebildetes Bildpaar in einem artifiziellen Bildraum einer Simulation entsteht,
**c)** Vergleichen (vgl) des synthetischen Produktbilds (PB_{syn}) mit dem synthetischen Simulationsbild (SB_{syn}) mittels eines Vergleichsoperators (VO),
**d)** Ausgeben (asg) eines das Produkt qualitativ bewertenden Vergleichsergebnisses (VGE), insbesondere **durch** eine Ausgabeeinheit (AEH) der Produktionsanlage (PA) oder einer Produktionsanlagensteuerung (PAS) der Produktionsanlage (PA).

2. Computer-implementiertes Verfahren nach Anspruch 1,
**dadurch gekennzeichnet, dass**
die Domänenadaption (DA) als ein "Machine Learning"-Modell nach dem Prinzip eines "Generative Adversarial Network <GAN>" durchgeführt wird, bei dem zur Datengenerierung zwei konkurrierende, als Generator und Diskriminator bezeichnete Künstliche Neuronale Netzwerke verwendet werden, von den der Generator artifizielle Daten erzeugt, die der Diskriminator auf Basis authentischer, z.B. anhand von Bildern erfasster, Daten prüft und wobei die beiden Netzwerke logisch und mathematisch so miteinander verknüpft sind, dass die vom Generator erzeugten artifiziellen Daten immer echter wirken und am Ende der Diskriminator nicht mehr in der Lage ist, die echten Daten von den authentischen Daten zu unterscheiden.

3. Computer-implementiertes Verfahren nach Anspruch 1 oder 2,
**dadurch gekennzeichnet, dass**
die trainierte (trn) Domänenadaption (DA) mit den Domänentransferparameter (DTP) in einem zweistufigen Training (trn) mit folgenden Schritten "S1" und "S2" durchgeführt wird "S1": Erzeugen eines Datensatzes auf der Basis von einer Vielzahl "n" von Bildpaaren, die für einheitlich gegebene intrinsische und extrinsische Parameter aus erfassten Produktbildern (PB1, ..., PBn) und dazugehörigen synthetischen Simulationsbildern (SB1_{syn}, ..., SBn_{syn}) gebildet werden;
"S2": Trainieren des Transfers von produktbildbezogenen Daten zu simulationsbildbezogenen Daten anhand des erzeugten Datensatzes durch lernende Methoden wie z.B. "Generative Adversarial Network <GAN>".

4. Computer-implementiertes Verfahren nach Anspruch 1 oder 2,
**dadurch gekennzeichnet, dass**
der Vergleichsoperator (VO) derart ausgebildet ist, dass der Vergleich pixelweise durchgeführt wird.

5. Computer-implementiertes Verfahren nach einem der Ansprüche 1 bis 4, **dadurch gekennzeichnet, dass** die Produktionsanlage (PA) ein Robotersystem oder Automatisierungssystem mit einem universell einsetzbaren Bewegungsautomat zum Ausführen von Handhabungs-, Service- und/oder Fertigungsaufgaben ist.

6. Computerimplementiertes Werkzeug (CIW), insbesondere ein als APP ausgebildetes Computer-Programm-Produkt (CPP), zur optischen Qualitätskontrolle von Zwischen- oder Endprodukten von Produktionsanlagen, bei dem für die Qualitätskontrolle
- ein von einer Bilderfassungseinrichtung (BEE) für gegebene intrinsische und extrinsische Parameter erfasstes Produktbild (PB) einer Produktionsanlage (PA) verwendet wird,
- Digitale Zwillingsdaten (DZD) von einem Digitalen Zwilling (DZ) der Produktionsanlage (PA) verwendet werden, wobei der Digitale Zwilling (DZ) zur Laufzeit der Produktionsanlage (PA) mit dieser synchronisiert ist,
**gekennzeichnet durch**
einen nicht-flüchtigen, lesbaren Speicher (SP), in dem prozessorlesbare Steuerprogrammbefehle eines Programm-Moduls (PGM) zur optischen Qualitätskontrolle gespeichert sind, und einen mit dem Speicher (SP) verbundenen Prozessor (PZ), der die Steuerprogrammbefehle des Programm-Moduls (PGM) zur optischen Qualitätskontrolle der Zwischen- oder Endprodukte von Produktionsanlagen ausführt, wobei das Programm-Modul (PGM) derart beschaffen und der die Steuerprogrammbefehle des Programm-Moduls (PGM) zur optischen Qualitätskontrolle ausführende Prozessor (PZ) derart ausgebildet sind, dass
**a**) ein auf den Digitale Zwillingsdaten (DZD) basierendes, synthetisches Simulationsbild (SB_{syn}) gerendert (rdn) wird, wobei dem gerenderten synthetischen Simulationsbild (SB_{syn}) die gleichen intrinsischen und extrinsischen Parameter zugrunde liegen wie bei der Produktbilderfassung,
**b**) das Produktbild (PB) aus einer realen Domäne in eine artifizielle Domäne mittels einer trainierten (trn) Domänenadaption (DA) transferiert (trf) wird, die **durch** das Training (trn) gewonnene Domänentransferparameter (DTP) enthält und mit der gemäß den Domänentransferparametern (DTP) aus dem Produktbild (PB) ein synthetisches Produktbild (PB_{syn}) erzeugt wird, wodurch zu Vergleichszwecken ein aus dem synthetischen Simulationsbild (SB_{syn}) und dem synthetischen Produktbild (PB_{syn}) gebildetes Bildpaar in einem artifiziellen Bildraum einer Simulation entsteht,
**c**) das synthetische Produktbild (PB_{syn}) mit dem synthetischen Simulationsbild (SB_{syn}) mittels eines Vergleichsoperators (VO) verglichen (vgl) wird,
**d**) ein das Produkt qualitativ bewertenden Vergleichsergebnisses (VGE) ausgegeben (asg) wird, insbesondere **durch** eine Ausgabeeinheit (AEH) der Produktionsanlage (PA) oder einer Produktionsanlagensteuerung (PAS) der Produktionsanlage (PA).

7. Computerimplementiertes Werkzeug (CIW) nach Anspruch 6,
**dadurch gekennzeichnet, dass**
der Prozessor (PZ) und das Programm-Modul (PGM) zur optischen Qualitätskontrolle derart ausgebildet sind, dass die Domänenadaption als ein "Machine Learning"-Modell nach dem Prinzip eines "Generative Adversarial Network <GAN>" durchgeführt wird, bei dem zur Datengenerierung zwei konkurrierende, als Generator und Diskriminator bezeichnete Künstliche Neuronale Netzwerke verwendet werden, von den der Generator artifizielle Daten erzeugt, die der Diskriminator auf Basis authentischer, z.B. anhand von Bildern erfasster, Daten prüft und wobei die beiden Netzwerke logisch und mathematisch so miteinander verknüpft sind, dass die vom Generator erzeugten artifiziellen Daten immer echter wirken und am Ende der Diskriminator nicht mehr in der Lage ist, die echten Daten von den authentischen Daten zu unterscheiden.

8. Computerimplementiertes Werkzeug (CIW) nach Anspruch 6 oder 7, **dadurch gekennzeichnet, dass** der Prozessor (PZ) und das Programm-Modul (PGM) zur optischen Qualitätskontrolle derart ausgebildet sind, dass die trainierte (trn) Domänenadaption (DA) mit den Domänentransferparameter (DTP) in einem zweistufigen Training (trn) mit folgenden Schritten "S1" und "S2" durchgeführt wird "S1": Erzeugen eines Datensatzes auf der Basis von einer Vielzahl "n" von Bildpaaren, die für einheitlich gegebene intrinsische und extrinsische Parameter aus erfassten Produktbildern (PB1, ..., PBn) und dazugehörigen synthetischen Simulationsbildern (SB1_{syn}, ..., SBn_{syn}) gebildet werden;
"S2": Trainieren des Transfers von produktbildbezogenen Daten zu simulationsbildbezogenen Daten anhand des erzeugten Datensatzes durch lernende Methoden wie z.B. "Generative Adversarial Network <GAN>".

9. Computerimplementiertes Werkzeug (CIW) nach einem der Ansprüche 6 bis 8, **dadurch gekennzeichnet, dass** der Prozessor (PZ) und das Programm-Modul (PGM) zur optischen Qualitätskontrolle sowie der Vergleichsoperator (VO) derart ausgebildet sind, dass der Vergleich pixelweise durchgeführt wird.

10. Computerimplementiertes Werkzeug (CIW) nach einem der Ansprüche 6 bis 9, **dadurch gekennzeichnet, dass** die Produktionsanlage (PA) ein Robotersystem oder Automatisierungssystem mit einem universell einsetzbaren Bewegungsautomat zum Ausführen von Handhabungs-, Service- und/oder Fertigungsaufgaben ist.

11. Produktionsanlagensteuerung (PAS) zur optischen Qualitätskontrolle von Zwischen- oder Endprodukten einer Produktionsanlage (PA), wobei
- eine Bilderfassungseinrichtung (BEE), die für gegebene intrinsische und extrinsische Parameter ein Produktbild (PB) der Produktionsanlage (PA) erfasst, entweder Bestandteil der Produktionsanlage (PA) und als solche mit der Produktionsanlagensteuerung (PAS) verbunden ist oder der Produktionsanlage (PA) zugeordnet und als solche mit der Produktionsanlagensteuerung (PAS) verbunden ist,
- eine Datenbank (DB), die Digitalen Zwillingsdaten (DZD) eines Digitalen Zwillings (DZ) der Produktionsanlage (PA) speichert, der Produktionsanlage (PA) zugeordnet und als solche mit der Produktionsanlagensteuerung (PAS) verbunden ist, wobei der Digitale Zwilling (DZ) zur Laufzeit der Produktionsanlage (PA) mit dieser synchronisiert ist,
**gekennzeichnet durch**
ein computerimplementiertes Werkzeug (CIW) nach einem der Anspruche 6 bis 10, das zur Durchführung des Verfahrens nach einem der Ansprüche 1 bis 5 in die Produktionsanlagensteuerung (PAS) ladbar ist.

12. Produktionsanlagensteuerung (PAS) nach Anspruch 11, **gekennzeichnet durch**
eine Steuerungseinheit (STE) für ein Robotersystem oder Automatisierungssystem mit einem universell einsetzbaren Bewegungsautomat zum Ausführen von Handhabungs-, Service- und/oder Fertigungsaufgaben.

## Claims

1. Computer-implemented method for optical quality control of intermediate or end products of production installations, in which for the quality control
- a product image (PB) of a production installation (PA) captured by an image capture device (BEE) for given intrinsic and extrinsic parameters is used,
- digital twin data (DZD) of a digital twin (DZ) of the production installation (PA) are used, wherein the digital twin (DZ) is synchronized with the production installation (PA) at the time of operation thereof,
**characterized by**
a) rendering (rdn) a synthetic simulation image (SB_{syn}) based on the digital twin data (DZD), wherein the rendered synthetic simulation image (SB_{syn}) is based on the same intrinsic and extrinsic parameters as during product image capture,
b) transferring (trf) the product image (PB) from a real domain into an artificial domain by means of a trained (trn) domain adaptation (DA) which contains domain transfer parameters (DTP) obtained by the training (trn) and with which a synthetic product image (PB_{syn}) is generated from the product image (PB) in accordance with the domain transfer parameters (DTP), whereby an image pair formed from the synthetic simulation image (SB_{syn}) and the synthetic product image (PB_{syn}) arises in an artificial image space of a simulation for comparison purposes,
c) comparing (vgl) the synthetic product image (PB_{syn}) with the synthetic simulation image (SB_{syn}) by means of a comparison operator (VO),
d) outputting (asg) a comparison result (VGE) which qualitatively assesses the product, in particular by way of an output unit (AEH) of the production installation (PA) or a production installation controller (PAS) of the production installation (PA).

2. Computer-implemented method according to Claim 1,
**characterized in that**
the domain adaptation (DA) is implemented as a "machine learning" model according to the principle of a "generative adversarial network <GAN>", in which data are generated by the use of two competing artificial neural networks referred to as generator and discriminator, of which the generator generates artificial data which the discriminator checks on the basis of authentic data, e.g. captured with the aid of images, and wherein the two networks are logically and mathematically combined with one another in such a way that the artificial data generated by the generator seem more and more genuine and at the end the discriminator is no longer able to differentiate the genuine data from the authentic data.

3. Computer-implemented method according to Claim 1 or 2,
**characterized in that**
the trained (trn) domain adaptation (DA) with the domain transfer parameters (DTP) is implemented in a two-stage training (trn) with the following steps "S1" and "S2"
"S1": generating a data set on the basis of a multiplicity "n" of image pairs which are formed from captured product images (PB1, ..., PBn) and associated synthetic simulation images (SB1_{syn}, ..., SBn_{syn}) for uniformly given intrinsic and extrinsic parameters;
"S2": training the transfer of product-image-related data to simulation-image-related data with the aid of the generated data set by way of learning methods such as e.g. "generative adversarial network <GAN>".

4. Computer-implemented method according to Claim 1 or 2,
**characterized in that**
the comparison operator (VO) is configured in such a way that the comparison is implemented pixel by pixel.

5. Computer-implemented method according to any of Claims 1 to 4, **characterized in that**
the production installation (PA) is a robot system or automation system with a universally usable automatic movement machine for executing handling, service and/or manufacturing tasks.

6. Computer-implemented tool (CIW), in particular a computer program product (CPP) configured as an APP, for optical quality control of intermediate or end products of production installations, in which for the quality control
- a product image (PB) of a production installation (PA) captured by an image capture device (BEE) for given intrinsic and extrinsic parameters is used,
- digital twin data (DZD) of a digital twin (DZ) of the production installation (PA) are used, wherein the digital twin (DZ) is synchronized with the production installation (PA) at the time of operation thereof,
**characterized by**
a nonvolatile, readable memory (SP), in which processor-readable control program instructions of a program module (PGM) for optical quality control are stored, and a processor (PZ) connected to the memory (SP), said processor executing the control program instructions of the program module (PGM) for optical quality control of the intermediate or end products of production installations, wherein the program module (PGM) is constituted in such a way, and the processor (PZ) that executes the control program instructions of the program module (PGM) for optical quality control is configured in such a way, that
a) a synthetic simulation image (SB_{syn}) based on the digital twin data (DZD) is rendered (rdn), wherein the rendered synthetic simulation image (SB_{syn}) is based on the same intrinsic and extrinsic parameters as during product image capture,
b) the product image (PB) is transferred (trf) from a real domain into an artificial domain by means of a trained (trn) domain adaptation (DA) which contains domain transfer parameters (DTP) obtained by the training (trn) and with which a synthetic product image (PB_{syn}) is generated from the product image (PB) in accordance with the domain transfer parameters (DTP), whereby an image pair formed from the synthetic simulation image (SB_{syn}) and the synthetic product image (PB_{syn}) arises in an artificial image space of a simulation for comparison purposes,
c) the synthetic product image (PB_{syn}) is compared (vgl) with the synthetic simulation image (SB_{syn}) by means of a comparison operator (VO),
d) a comparison result (VGE) which qualitatively assesses the product is output (asg), in particular by way of an output unit (AEH) of the production installation (PA) or a production installation controller (PAS) of the production installation (PA).

7. Computer-implemented tool (CIW) according to Claim 6,
**characterized in that**
the processor (PZ) and the program module (PGM) for optical quality control are configured in such a way that the domain adaptation is implemented as a "machine learning" model according to the principle of a "generative adversarial network <GAN>", in which data are generated by the use of two competing artificial neural networks referred to as generator and discriminator, of which the generator generates artificial data which the discriminator checks on the basis of authentic data, e.g. captured with the aid of images, and wherein the two networks are logically and mathematically combined with one another in such a way that the artificial data generated by the generator seem more and more genuine and at the end the discriminator is no longer able to differentiate the genuine data from the authentic data.

8. Computer-implemented tool (CIW) according to Claim 6 or 7,
**characterized in that**
the processor (PZ) and the program module (PGM) for optical quality control are configured in such a way that the trained (trn) domain adaptation (DA) with the domain transfer parameters (DTP) is implemented in a two-stage training (trn) with the following steps "S1" and "S2"
"S1": generating a data set on the basis of a multiplicity "n" of image pairs which are formed from captured product images (PB1, ..., PBn) and associated synthetic simulation images (SB1_{syn}, ..., SBn_{syn}) for uniformly given intrinsic and extrinsic parameters;
"S2": training the transfer of product-image-related data to simulation-image-related data with the aid of the generated data set by way of learning methods such as e.g. "generative adversarial network <GAN>".

9. Computer-implemented tool (CIW) according to any of Claims 6 to 8, **characterized in that**
the processor (PZ) and the program module (PGM) for optical quality control and also the comparison operator (VO) are configured in such a way that the comparison is implemented pixel by pixel.

10. Computer-implemented tool (CIW) according to any of Claims 6 to 9, **characterized in that**
the production installation (PA) is a robot system or automation system with a universally usable automatic movement machine for executing handling, service and/or manufacturing tasks.

11. Production installation controller (PAS) for optical quality control of intermediate or end products of a production installation (PA), wherein
- an image capture device (BEE) which captures a product image (PB) of the production installation (PA) for given intrinsic and extrinsic parameters either is part of the production installation (PA) and as such is connected to the production installation controller (PAS) or is assigned to the production installation (PA) and as such is connected to the production installation controller (PAS),
- a database (DB) which stores digital twin data (DZD) of a digital twin (DZ) of the production installation (PA) is assigned to the production installation (PA) and as such is connected to the production installation controller (PAS), wherein the digital twin (DZ) is synchronized with the production installation (PA) at the time of operation thereof
**characterized by**
a computer-implemented tool (CIW) according to any of Claims 6 to 10, which is loadable into the production installation controller (PAS) in order to implement the method according to any of Claims 1 to 5.

12. Production installation controller (PAS) according to Claim 11, **characterized by**
a control unit (STE) for a robot system or automation system with a universally usable automatic movement machine for executing handling, service and/or manufacturing tasks.

## Revendications

1. Procédé mis en œuvre par ordinateur pour le contrôle de qualité optique de produits intermédiaires ou finaux d'installations de production, dans lequel, pour le contrôle de qualité,
- une image de produit (PB) d'une installation de production (PA) capturée par un dispositif de capture d'image (BEE) pour des paramètres intrinsèques et extrinsèques donnés est utilisée,
- des données jumelles numériques (DZD) sont utilisées par une jumelle numérique (DZ) de l'installation de production (PA), dans lequel la jumelle numérique (DZ) est synchronisée avec l'installation de production (PA) au moment de son fonctionnement,
**caractérisé par**
a) le rendu (rdn) d'une image de simulation synthétique (SB_{syn}) basée sur les données jumelles numériques (DZD), dans lequel les mêmes paramètres intrinsèques et extrinsèques sous-tendent l'image de simulation synthétique (SB_{syn}) rendue que lors de la capture d'image de produit,
b) le transfert (trf) de l'image de produit (PB) d'un domaine réel vers un domaine artificiel au moyen d'une adaptation de domaines (DA) entraînée (trn) qui contient des paramètres de transfert de domaines (DTP) obtenus par le biais de l'entraînement (trn) et avec laquelle est créée une image de produit synthétique (PB_{syn}) à partir de l'image de produit (PB) selon les paramètres de transfert de domaines (DTP), par quel moyen une paire d'images formée à partir de l'image de simulation synthétique (SB_{syn}) et de l'image de produit synthétique (PB_{syn}) apparaît dans un espace d'image artificiel d'une simulation à des fins de comparaison,
c) la comparaison (vgl) de l'image de produit synthétique (PB_{syn}) avec l'image de simulation synthétique (SB_{syn}) au moyen d'un opérateur de comparaison (VO),
d) l'émission en sortie (asg) d'un résultat de comparaison (VGE) évaluant qualitativement le produit, en particulier par le biais d'une unité de sortie (AEH) de l'installation de production (PA) ou d'une commande d'installation de production (PAS) de l'installation de production (PA).

2. Procédé mis en œuvre par ordinateur selon la revendication 1,
**caractérisé en ce que**
l'adaptation de domaines (DA) est réalisée en tant que modèle d'apprentissage machine (« *Machine Learning* ») selon le principe d'un réseau antagoniste génératif (« *Generative Adversarial Network* <GAN> »), dans lequel, pour la génération de données, sont utilisés deux réseaux neuronaux artificiels concurrents, désignés sous le nom de générateur et de discriminateur, le générateur créant des données artificielles que le discriminateur vérifie sur la base de données authentiques, capturées par exemple à l'aide d'images, et dans lequel les deux réseaux sont logiquement et mathématiquement combinés l'un à l'autre de sorte que les données artificielles créées par le générateur semblent de plus en plus véritables et qu'à la fin le discriminateur n'est plus en mesure de différencier les données véritables des données authentiques.

3. Procédé mis en œuvre par ordinateur selon la revendication 1 ou la revendication 2, **caractérisé en ce que**
l'adaptation de domaines (DA) entraînée (trn) avec les paramètres de transfert de domaines (DTP) est réalisée dans un entraînement (trn) en deux stades avec les étapes « S1 » et « S2 » suivantes
« S1 » : création d'un ensemble de données sur la base d'une pluralité « n » de paires d'images qui sont formées à partir d'images de produit (PB1, ..., PBn) capturées et d'images de simulation synthétiques (SB1_{syn}, ..., SBn_{syn}) s'y rapportant pour des paramètres intrinsèques et extrinsèques donnés de manière homogène ;
« S2 » : entraînement du transfert de données relatives à une image de produit vers des données relatives à une image de simulation à l'aide de l'ensemble de données créé par le biais de méthodes d'apprentissage, comme par exemple un réseau antagoniste génératif (« *Generative Adversarial Network* <GAN> »).

4. Procédé mis en œuvre par ordinateur selon la revendication 1 ou la revendication 2, **caractérisé en ce que**
l'opérateur de comparaison (VO) est conçu de telle sorte que la comparaison est réalisée pixel par pixel.

5. Procédé mis en œuvre par ordinateur selon l'une des revendications 1 à 4, **caractérisé en ce que**
l'installation de production (PA) est un système robotique ou un système d'automatisation avec une machine à mouvement automatique déployable de manière universelle pour l'exécution de tâches de manipulation, de service et/ou de fabrication.

6. Outil mis en œuvre par ordinateur (CIW), en particulier produit de programme informatique (CPP) conçu en tant qu'APP, pour le contrôle de qualité optique de produits intermédiaires ou finaux d'installations de production, dans lequel, pour le contrôle de qualité,
- une image de produit (PB) d'une installation de production (PA) capturée par un dispositif de capture d'image (BEE) pour des paramètres intrinsèques et extrinsèques donnés est utilisée,
- des données jumelles numériques (DZD) sont utilisées par une jumelle numérique (DZ) de l'installation de production (PA), dans lequel la jumelle numérique (DZ) est synchronisée avec l'installation de production (PA) au moment de son fonctionnement,
**caractérisé par**
une mémoire (SP) non volatile lisible, dans laquelle sont stockées des instructions de programme de commande lisibles par processeur d'un module de programme (PGM) pour le contrôle de qualité optique, et un processeur (PZ) relié à la mémoire (SP), lequel exécute les instructions de programme de commande du module de programme (PGM) pour le contrôle de qualité optique des produits intermédiaires ou finaux d'installations de production, dans lequel le module de programme (PGM) est agencé et le processeur (PZ) exécutant les instructions de programme de commande du module de programme (PGM) pour le contrôle de qualité optique est conçu de telle sorte que
a) une image de simulation synthétique (SB_{syn}) basée sur les données jumelles numériques (DZD) est rendue (rdn), dans lequel les mêmes paramètres intrinsèques et extrinsèques sous-tendent l'image de simulation synthétique (SB_{syn}) rendue que lors de la capture d'image de produit,
b) l'image de produit (PB) est transférée (trf) d'un domaine réel vers un domaine artificiel au moyen d'une adaptation de domaines (DA) entraînée (trn) qui contient des paramètres de transfert de domaines (DTP) obtenus par le biais de l'entraînement (trn) et avec laquelle est créée une image de produit synthétique (PB_{syn}) à partir de l'image de produit (PB) selon les paramètres de transfert de domaines (DTP), par quel moyen une paire d'images formée à partir de l'image de simulation synthétique (SB_{syn}) et de l'image de produit synthétique (PB_{syn}) apparaît dans un espace d'image artificiel d'une simulation à des fins de comparaison,
c) l'image de produit synthétique (PB_{syn}) est comparée (vgl) avec l'image de simulation synthétique (SB_{syn}) au moyen d'un opérateur de comparaison (VO),
d) un résultat de comparaison (VGE) évaluant qualitativement le produit est émis en sortie (asg), en particulier par le biais d'une unité de sortie (AEH) de l'installation de production (PA) ou d'une commande d'installation de production (PAS) de l'installation de production (PA).

7. Outil mis en œuvre par ordinateur (CIW) selon la revendication 6, **caractérisé en ce que**
le processeur (PZ) et le module de programme (PGM) pour le contrôle de qualité optique sont conçus de telle sorte que l'adaptation de domaines est réalisée en tant que modèle d'apprentissage machine (« *Machine Learning* ») selon le principe d'un réseau antagoniste génératif (« *Generative Adversarial Network* <GAN> »), dans lequel, pour la génération de données, sont utilisés deux réseaux neuronaux artificiels concurrents, désignés sous le nom de générateur et de discriminateur, le générateur créant des données artificielles que le discriminateur vérifie sur la base de données authentiques, capturées par exemple à l'aide d'images, et dans lequel les deux réseaux sont logiquement et mathématiquement combinés l'un à l'autre de sorte que les données artificielles créées par le générateur semblent de plus en plus véritables et qu'à la fin le discriminateur n'est plus en mesure de différencier les données véritables des données authentiques.

8. Outil mis en œuvre par ordinateur (CIW) selon la revendication 6 ou la revendication 7, **caractérisé en ce que** le processeur (PZ) et le module de programme (PGM) pour le contrôle de qualité optique sont conçus de telle sorte que l'adaptation de domaines (DA) entraînée (trn) avec les paramètres de transfert de domaines (DTP) est réalisée dans un entraînement (trn) en deux stades avec les étapes « S1 » et « S2 » suivantes
« S1 » : création d'un ensemble de données sur la base d'une pluralité « n » de paires d'images qui sont formées à partir d'images de produit (PB1, ..., PBn) capturées et d'images de simulation synthétiques (SB1_{syn}, ..., SBn_{syn}) s'y rapportant pour des paramètres intrinsèques et extrinsèques donnés de manière homogène ;
« S2 » : entraînement du transfert de données relatives à une image de produit vers des données relatives à une image de simulation à l'aide de l'ensemble de données créé par le biais de méthodes d'apprentissage, comme par exemple un réseau antagoniste génératif (« *Generative Adversarial Network* <GAN> »).

9. Outil mis en œuvre par ordinateur (CIW) selon l'une des revendications 6 à 8, **caractérisé en ce que**
le processeur (PZ) et le module de programme (PGM) pour le contrôle de qualité optique ainsi que l'opérateur de comparaison (VO) sont conçus de telle sorte que la comparaison est réalisée pixel par pixel.

10. Outil mis en œuvre par ordinateur (CIW) selon l'une des revendications 6 à 9, **caractérisé en ce que**
l'installation de production (PA) est un système robotique ou un système d'automatisation avec une machine à mouvement automatique déployable de manière universelle pour l'exécution de tâches de manipulation, de service et/ou de fabrication.

11. Commande d'installation de production (PAS) pour le contrôle de qualité optique de produits intermédiaires ou finaux d'une installation de production (PA), dans laquelle
- un dispositif de capture d'image (BEE), lequel capture une image de produit (PB) de l'installation de production (PA) pour des paramètres intrinsèques et extrinsèques donnés, soit fait partie de l'installation de production (PA) et est relié en tant que tel à la commande d'installation de production (PAS), soit est associé à l'installation de production (PA) et est relié en tant que tel à la commande d'installation de production (PAS),
- une base de données (DB), laquelle stocke des données jumelles numériques (DZD) d'une jumelle numérique (DZ) de l'installation de production (PA), est associée à l'installation de production (PA) et est reliée en tant que telle à la commande d'installation de production (PAS), dans laquelle la jumelle numérique (DZ) est synchronisée avec l'installation de production (PA) au moment de son fonctionnement,
**caractérisée par**
un outil mis en œuvre par ordinateur (CIW) selon l'une des revendications 6 à 10, lequel est chargeable pour la réalisation du procédé selon l'une des revendications 1 à 5 dans la commande d'installation de production (PAS).

12. Commande d'installation de production (PAS) selon la revendication 11, **caractérisée par**
une unité de commande (STE) pour un système robotique ou un système d'automatisation avec une machine à mouvement automatique déployable de manière universelle pour l'exécution de tâches de manipulation, de service et/ou de fabrication.
